(19) Europäisches Patentamt

European Patent Office

Office européen des brevets

(11) Veröffentlichungsnummer: **0 253 231 B1**

(12) **EUROPÄISCHE PATENTSCHRIFT**

(45) Veröffentlichungstag der Patentschrift: **26.02.92**

(21) Anmeldenummer: **87109585.7**

(22) Anmeldetag: **03.07.87**

(51) Int. Cl.⁵: **A01D  34/70**

(54) **Motorisch angetriebener Rasenmäher.**

(30) Priorität: **11.07.86 DE 8618664 U**

(43) Veröffentlichungstag der Anmeldung:
**20.01.88 Patentblatt  88/03**

(45) Bekanntmachung des Hinweises auf die
Patenterteilung:
**26.02.92 Patentblatt  92/09**

(84) Benannte Vertragsstaaten:
**BE DE FR IT**

(56) Entgegenhaltungen:
**DE-A- 3 542 276**
**FR-A- 2 247 152**
**FR-A- 2 488 482**
**GB-A- 2 101 864**
**US-A- 4 250 698**

(73) Patentinhaber: **AL-KO KOBER AG**
**Ichenhauser Strasse 14**
**W-8871 Kötz 2(DE)**

(72) Erfinder: **Sykora, Norbert**
**Heidenbühl 23**
**W-8873 Ichenhausen(DE)**
Erfinder: **Lechler, Richard**
**Fichtenweg 10**
**W-8871 Kötz(DE)**
Erfinder: **Eberle, Anton**
**Bürgermeister-Weiss-Strasse 8**
**W-8873 Hochwang(DE)**

(74) Vertreter: **Ernicke, Hans-Dieter, Dipl.-Ing. et al**
**Schwibbogenplatz 2b**
**W-8900 Augsburg(DE)**

## Beschreibung

Die Erfindung bezieht sich auf einen motorisch angetriebenen Rasenmäher mit einem um eine vertikale Achse rotierenden, von einem Gehäuse umgebenen Sichel-oder Flügelmesser und mit einem rückseitigen, von einer schwenkbaren Klappe abdeckbaren Auswurfkanal, an den ein mit einer Ausschüttöffnung versehener Grasfangbehälter bei hochgeschwenkter, die Ausschüttöffnung überdeckkender Klappe anschließbar und mit der Klappe arretierbar ist. Ein motorisch angetriebener Rasenmäher mit diesen Merkmalen ist dem Prospekt "Gartengeräte-Katalog 1986 AL-KO international" als bekannt zu entnehmen. Dieser mit der Bezeichnung aero-Keil versehene Rasenmäher zeichnet sich durch eine besonders gute Luftführung beim Mähen und Füllen des Grasfangbehälters aus. Durch geschickt angeordnete Öffnungen im Gehäuse des Rasenmähers sowie in Grasfangbehälter wird im letzteren eine Sogströmung erzeugt, die zu einer maximalen Förder-und Fangleistung führt. Andererseits wird über den Rücksog die Umluft aus dem Grasfangbehälter zurück ins Motormähergehäuse geführt.

Die Grasfangbehälter bestehen in der Regel aus Kunststoff. Sie werden gelenkig am Gehäuse des Rasenmähers eingehängt und in einer leicht angehobenen Stelle durch die Arretiervorrichtung der Klappe gehalten, die dann die Ausschüttöffnung des Grasfangbehälters überdeckt.

Zufolge seiner keilförmigen Gestaltung kann dieser Rasenmäher besser als andere überdeckte Rasenstellen erreichen. Problematisch ist es jedoch, den optimalen Zustand der Befüllung des Grasfangbehälters zu erkennen, um diesen rechtzeitig an gewünschter Stelle entleeren zu können. Man erkennt die vollständige Füllung des Grasfangbehälters leider erst dann, wenn dieser nicht mehr aufnahmefähig ist und das Mähgut auf dem Boden zurückliegen bleibt und nach Entleeren des Grasfangbehälters nochmals überfahren werden muß.

Der Erfindung liegt die Aufgabe zugrunde, die Funktionalität des erwähnten vorbekannten Rasenmähers zu erhöhen und dem Benutzer insbesondere eine sichere Hilfestellung zum Erkennen des Füllzustandes des Grasfangbehälters zu geben.

Ausgehend von den eingangs erwähnten Merkmalen des vorbekannten Rasenmähers besteht die Erfindung darin, daß der den Auswurfkanal abdeckkende Teil der Klappe aus einer transparenten Scheibe aus einem schlagfesten Material besteht.

Damit wird erreicht, daß derjenige Teilbereich der Klappe transparent ausgebildet ist, der den bei einem Füllvorgang zuletzt befüllbaren Bereich des Grasfangbehälters überdeckt. Dies ist normalerweise die den Auswurfkanal abdeckende Stelle der Klappe. Wird nämlich die Klappe hochgeschwenkt, um den Grasfangbehälter am Gehäuse des Rasenmähers einzuhängen, dann deckt die transparente Stelle den Teil der Ausschüttöffnung des Grasfangbehälters ab, der zuletzt befüllt wird.

Es ist zwar durch die FR-A 2 247 152 bekannt, die Klappe eines Rasenmähers als Gitter auszubilden. Damit soll eine günstigere Strömung der aus dem Grasfangbehälter austretenden Luft erreicht werden. Zufolge dieser Strömung setzen sich von Anfang an Grasteile an der Gitterinnenseite ab und lassen daher nicht den Füllstand des Grasfangbehälters erkennen.

Es versteht sich von selbst, daß das Material der erfindungsgemäßen Scheibe den Anforderungen entsprechen muß, die beim Betrieb eines Rasenmähers entstehen. Das Material muß schlagfest und widerstandsfähig sein. Es hat sich als zweckmäßig erwiesen, das transparente Material aus Polycarbonat herzustellen, ohne daß die Erfindung darauf beschränkt ist. Es empfiehlt sich auch, dieses transparente Material farbig zu gestalten, beispielsweise nach Art von Rauchglas.

Im konstruktiven Bereich der Erfindung ist beispielsweise vorgesehen, daß die Klappe einen der Fläche des transparenten Teilbereiches entsprechenden Durchbruch aufweist, in den ein Fenster aus dem transparenten Material eingesetzt wird. Dabei sollte der Rand des Durchbruches eine umlaufende, hinterschnittene Nut aufweisen, in die ein umlaufender Rand des Fensters passend eingreift.

Wenn dieser Rand des Fensters in die hinterschnittene Nut der Klappe in deren fabrikationsheißem Zustand von der einen Seite her eingesetzt wird, dann kann durch Schrumpfung des sich abkühlenden Klappenmaterials diese Verbindung von Klappe und Fenster formschlüssig festgelegt werden. In diesem Falle wäre das Fenster nicht austauschbar.

Wenn man aber eine nachträgliche Demontage und Montage für wichtig hält, kann das Fenster durchaus auch mit anderen Mitteln an der Klappe festgelegt werden, beispielsweise durch Verschraubung, Vernietung, Verklemmung oder dergleichen.

Es hat sich schließlich als zweckmäßig erwiesen, den transparenten Bereich der Klappe kalottenförmig nach außen (konvex) zu wölben. Einerseits wird durch diese Wölbung eine Spiegelung vermieden, die das Erkennen des Füllzustandes des Grasfangbehälters erschweren würde. Andererseits kann die Wölbung, wenn man dies wünscht, einen Linseneffekt herbeiführen, in dem man vergrößert den Zustand unterhalb des transparenten Bereiches erkennt.

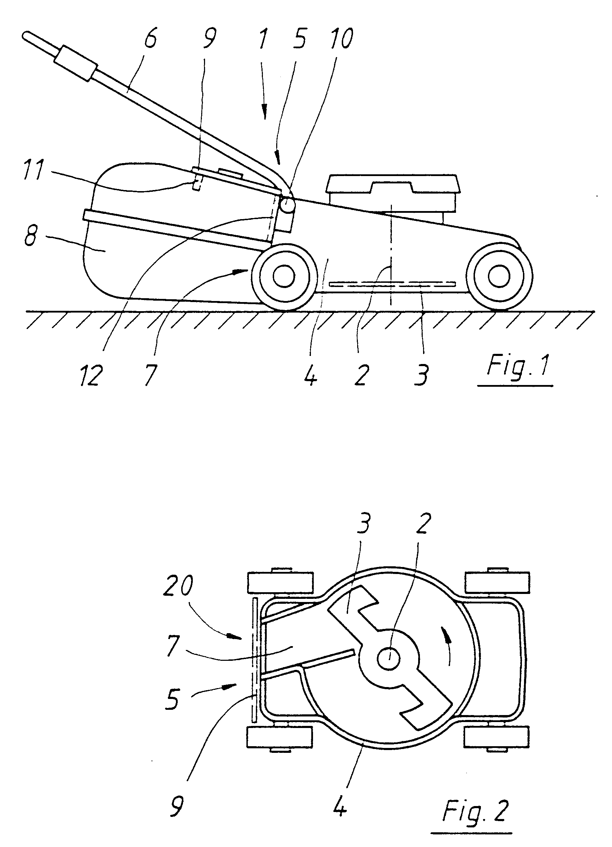

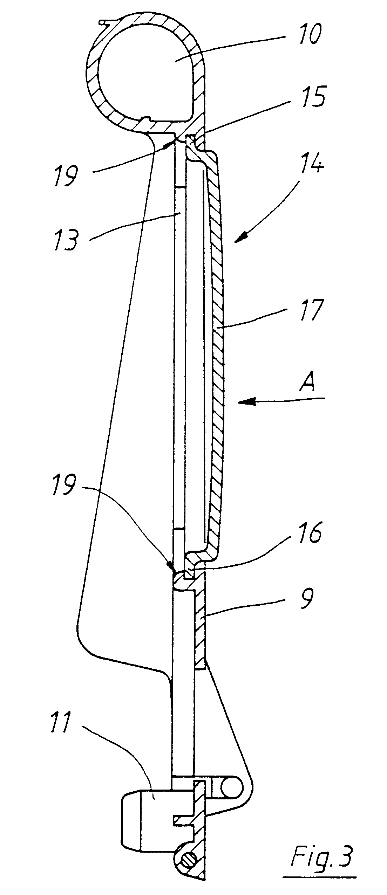

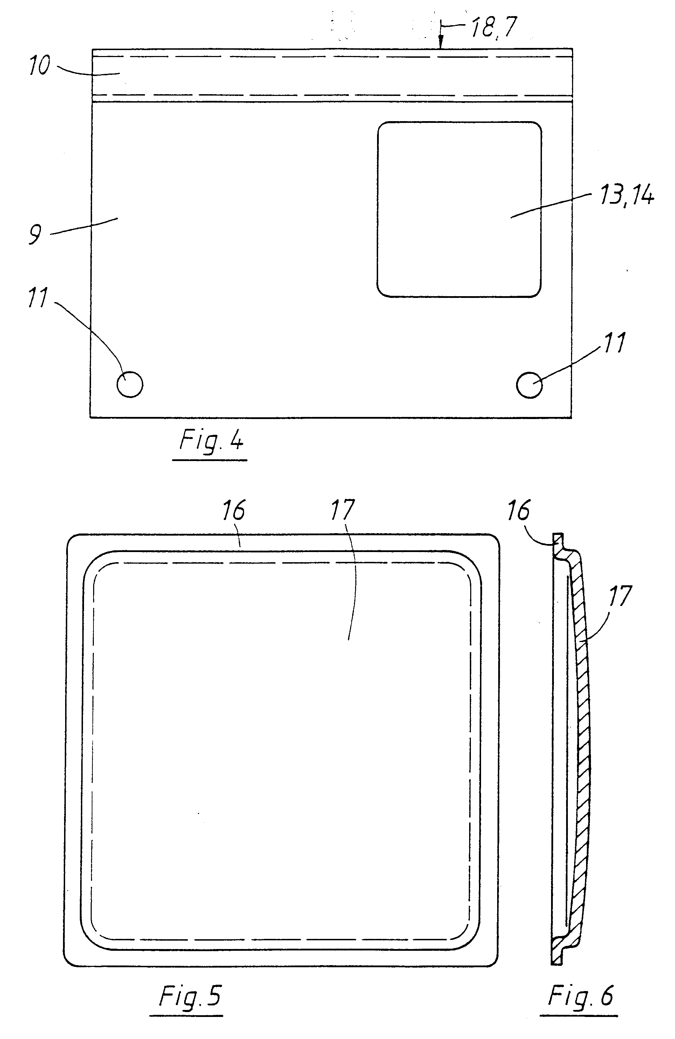

Einzelheiten der Erfindung sind in der Zeichnung schematisch und beispielsweise dargestellt. Es zeigen:

Fig (1): eine Seitenansicht eines motorisch angetriebenen Rasenmähers mit angesetztem Grasfangbehälter,

Fig (2): eine Unteransicht des Rasenmähergehäuses mit der Darstellung des Auswurfkanales,

Fig (3): einen Längsschnitt durch eine den Auswurfkanal des Rasenmähers abdeckende Klappe,

Fig (4): eine Draufsicht auf die Klappe gemäß Fig. (3) in Richtung des Pfeiles A in Fig. (3) und

Fig.(5)und (6) Draufsicht und Längsschnitt eines in die Klappe einsetzbaren Fensters aus transparentem Material.

Der in den Fig. (1) und (2) dargestellte Rasenmäher (1) weist ein um eine vertikale Achse (2) rotierendes und motorisch angetriebenes Messer, beispielsweise Flügelmesser oder Sichelmesser, auf. Der Wirkungsbereich dieses Messers (3) ist von einem Gehäuse (4) des Rasenmähers (1) umgeben.

An der rückwärtigen Seite (5) des Rasenmähers (1) befindet sich ein Handgriffbügel (6) sowie ein Auswurfkanal (7) im Gehäuse (4) (vgl. Fig. (2)). Dieser Auswurfkanal (7) wird normalerweise von einer Klappe (9) abgedeckt, die am Gehäuse (4) im Klappenlager (10) schwenkbar gelagert ist. Das gemähte und vom Messer (3) durch den Auswurfkanal (7) geförderte Material trifft gegen diese in abgeschwenkter Lage befindliche Klappe (9) und wird dadurch schwadenmäßig am Boden abgesetzt.

Wenn aber an den Rasenmäher (1) ein Grasfangbehälter (8) angesetzt werden soll, der in der Nähe des Klappenlagers (10) gelagert wird, dann muß die Klappe (9) aus der in Fig. (1) gestrichelt gezeigten Stellung (12) in die ausgezogene Stellung hochgeschwenkt werden, wobei die Klappe (9) sich über die Ausschüttöffnung des Grasfangbehälters (8) überdeckend legt und außerdem mit einer Zapfenarretierung (11) den Grasfangbehälter (8) in der angesetzten Stellung fixierend hält.

Um nun den Füllzustand des Grasfangbehälters (8) zu erkennen, wird die Klappe (9) ganz oder teilweise transparent ausgebildet. Hierzu sollte ein Material Verwendung finden, das den technischen Anforderungen beim Grasmähen gewachsen ist, indem es insbesondere dem Steinschlag gewachsen sein muß. Es hat sich als zweckmäßig erwiesen, für das transparente Material einen Kunststoff, nämlich Polycarbonat, zu verwenden. Dieser Kunststoff kann unter Beibehaltung der Transparenz gefärbt sein, beispielsweise nach Art von Rauchglas.

Wenn man im Sinne einer kostengünstigeren Variante nicht die ganze Klappe (9) sondern nur einen Teilbereich dieser Klappe (9) transparent gestalten will, empfiehlt sich eine Gestaltung entsprechend den Figuren (3-6).

In Fig (3) ist eine erfindungsgemäße Klappe (9) im Längsschnitt dargestellt. Am einen Rand weist sie das Klappenlager (10) auf, mit dem sie am Gehäuse (4) des Rasenmähers (1) gelagert werden kann. Am gegenüberliegenden Rand befindet sich eine Zapfenarretierung (11), die in entsprechende Aussparungen des Grasfangbehälters (8) eingreift, wenn dieser am Gehäuse (4) gelenkig eingehängt und in die Betriebsstellung gebracht wird. Klappe (9) und Grasfangbehälter (8) halten sich somit gegenseitig in der Arbeitsstellung.

Die Klappe (9) besitzt beim erwähnten Ausführungsbeispiel einen Durchbruch (13) an einer bestimmten Stelle, wo ein Fenster (14) aus dem transparenten Material eingesetzt werden soll. Diese bestimmte Stelle befindet sich dort, wo der Grasfangbehälter (8) zuletzt befüllt wird. Normalerweise befindet sich diese Stelle und damit der Durchbruch (13) in Fortsetzung des Auswurfkanales (7) gemäß Fig (2), d.h. in dem Bereich, der diesen Auswurfkanal (7) bei abgeschwenkter Klappe (9) abdeckt. Schwenkt man die Klappe (9) in die in Fig. (1) gezeigte Stellung hoch, damit sie den Grasfangbehälter (8) arretieren und dessen Ausschüttöffnung überdecken kann, dann befindet sich der Durchbruch (13) und damit das Fenster (14) genau an der Stelle des Grasfangbehälters (8), welche zuletzt befüllt wird.

Es empfiehlt sich, den Durchbruch (13) mit einer umlaufenden hinterschnittenen Nut (15) zu versehen, in welche ein umlaufender Rand (16) des Fensters (14) eingreift. Wie besonders die Fig. (5) und (6) zeigen, wölbt sich der durchsichtige Bereich des Fensters (14) in Form eines kalottenförmigen Bereiches (17) nach außen, was zur Folge hat, daß Spiegelungen nicht eintreten können und statt dessen der Zustand unterhalb des Fensters (14) in vergrößerter Darstellung erkennbar wird (Linseneffekt).

Wenn die Klappe (9) aus einem schlagfesten, aber nicht transparenten Kunststoff besteht und das Fenster (14) z.B. aus Polycarbonat besteht, dann empfiehlt sich eine gegenseitige feste Verbindung dahingehend, das Fenster (14) in den Durchbruch (13) einzusetzen, während die Klappe (9) im Zuge ihres Herstellungsvorganges noch heiß ist. Man kann dann nämlich das Fenster (14) von der einen Seite her in den Durchbruch (13) und die umlaufende Nut (15) einschieben. Der formenschlüssige Hintergriff des umlaufenden Randes (16) durch die Nutenstege erfolgt dann während des Abkühlens des Klappenmaterials (9). Um das Einschieben zu fördern, ist der innenseitige Steg (19) der Nutenbegrenzung abgeschrägt bzw. abgerundet ausgebildet.

Mit (18) ist in Fig. (4) die Auswurfrichtung des gemähten Materials gezeigt, was den Auswurfkanal (7) gemäß Fig. (2) passiert. In Fig. (2) ist außerdem eine abdeckende Stelle (20) symbolisch gezeigt, welche den Ort des Durchbruches (13) der Klappe (9) verdeutlichen soll.

Im Zuge nicht dargestellter Varianten kann der Gegenstand des Ausführungsbeispiels noch weiter verändert werden. So ist es beispielsweise möglich, längs der Innenfläche des Fensters (14) bzw. des kalottenförmigen Bereiches (17) eine Art Scheibenwischer anzubringen, der von außen her manuell oder auch während des Betriebes motorisch angetrieben werden kann. Ein solcher Scheibenwischer hat den Sinn, das dauerhafte Festsetzen des gemähten Grases an der Innenseite des Fensters (14) zu verhindern.

## Patentansprüche

1. Motorisch angetriebener Rasenmäher mit einem um eine vertikale Achse rotierenden, von einem Gehäuse umgebenen Sichel- oder Flügelmesser und mit einem rückseitigen, von einer schwenkbaren Klappe abdeckbaren Auswurfkanal, an den ein mit einer Ausschüttöffnung versehener Grasfangbehälter bei hochgeschwenkter die Ausschüttöffnung überdeckender Klappe anschließbar und mit der Klappe arretierbar ist, dadurch **gekennzeichnet,** daß der den Auswurfkanal (7) abdeckende Teil der Klappe (9) aus einer transparenten Scheibe (14) aus einem schlagfesten Material besteht.

2. Rasenmäher nach Anspruch (1), dadurch **gekennzeichnet,** daß die transparente Scheibe (14) aus Polycarbonat besteht.

3. Rasenmäher nach Anspruch (1) oder (2), dadurch **gekennzeichnet,** daß farbig transparentes Material vorgesehen ist.

4. Rasenmäher nach Anspruch (1) oder einem der folgenden, dadurch **gekennzeichnet,** daß die Klappe (9) einen der Fläche der transparenten Scheibe (14) entsprechenden Durchbruch (13) aufweist, in den die Scheibe (14) eingesetzt ist.

5. Rasenmäher nach Anspruch (4), dadurch **gekennzeichnet,** daß der Rand des Durchbruches (13) eine umlaufende, hinterschnittene Nut (15) aufweist, in die ein umlaufender Rand (16) der Scheibe (14) passend eingreift.

6. Rasenmäher nach Anspruch (5), dadurch **gekennzeichnet,** daß der Rand (16) der Scheibe (14) in die hinterschnittene Nut (15) der Klappe (9) in deren fabrikationsheißem Zustand eingesetzt und durch Schrumpfung des sich abkühlenden Klappenmaterials formschlüssig festgelegt ist.

7. Rasenmäher nach Anspruch (1) oder einem der folgenden, dadurch **gekennzeichnet,** daß die Scheibe (14) kalottenförmig (17) nach außen (konvex) gewölbt ist.

## Claims

1. Motor-driven lawn mower having, rotating about a vertical axis and surrounded by a housing, a rotary or flyer blade, and having a rearward ejection channel which may covered by a pivotal flap, which may be adjoined by a grass collection container provided with a dumping opening when the flap is pivoted up and covers the dumping opening, and which may be locked by the flap, characterized in that the part of the flap (9) covering the ejection channel (7) comprises a transparent disc (14) of a shock-resistant material.

2. Lawn mower according to Claim (1), characterized in that the transparent disc (14) comprises polycarbonate.

3. Lawn mower according to Claim (1) or (2), characterized in that material of transparent colour is provided.

4. Lawn mower according to Claim (1) Or one of the subsequent claims, characterized in that the flap (9) has a breach (13) which corresponds to the surface of the transparent disc (14) and in which the disc (14) is set.

5. Lawn mower according to Claim (4), characterized in that the edge of the breach (13) has a peripheral undercut groove (15) into which a peripheral edge (16) of the disc (14) engages fittingly.

6. Lawn mower according to Claim (5), characterized in that the edge (16) of the disc (14) is set in the undercut groove (15) of the flap (9) in the hot state thereof from manufacture and is fixed with form fit by shrinking the cooling flap material.

7. Lawn mower according to Claim (1) or one of the subsequent claims, characterized in that the disc (14) bulges (convexly) outwards in the shape of a cup (17).

## Revendications

**1.** Tondeuse à gazon, entraînée par un moteur et comportant un couteau en forme de faucille ou d'ailette, tournant par rapport à un axe vertical et entouré d'un châssis et une goulotte d'éjection qui peut être recouverte à l'arrière d'un volet basculant et à laquelle peut être raccordé un bac collecteur d'herbe muni d'un orifice de déchargement, lorsque le volet recouvrant l'orifice de déchargement est soulevé, le bac collecteur d'herbe pouvant être bloqué par le volet, caractérisée en ce que la partie du volet (9) recouvrant la goulotte d'éjection (7) est constitué d'un disque (14) transparent en un matériau résistant aux chocs.

**2.** Tondeuse à gazon suivant la revendication 1, caractérisée en ce que le disque (14) transparent est en polycarbonate.

**3.** Tondeuse suivant la revendication 1 ou 2, caractérisée en ce qu'il est prévu un matériau transparent coloré.

**4.** Tondeuse à gazon suivant la revendication 1 ou l'une des suivantes, caractérisée en ce que le volet (9) comporte un passage (13) correspondant à la surface du disque (14) transparent et dans lequel est inséré le disque (14).

**5.** Tondeuse à gazon suivant la revendication 4, caractérisée en ce que le bord du passage (13) comporte une gorge (15) faisant tout le tour et en contre-dépouille dans laquelle pénètre, de manière ajustée, un bord (16) périphérique du disque (14).

**6.** Tondeuse à gazon suivant la revendication 5, caractérisée en ce que le bord (16) du disque (14) est inséré dans gorge (15) en contre-dépouille du volet (9), alors qu'il est chaud de fabrication, et est fixé avec complémentarité de formes par le retrait du matériau du volet qui se refroidit.

**7.** Tondeuse à gazon suivant la revendication 1 ou l'une des suivantes, caractérisée en ce que le disque (14) est incurvé vers l'extérieur (convexe) en forme de calotte (17).

_Fig.1_

_Fig.2_

*Fig.3*

10

9

11

13,14

18,7

11

_Fig. 4_

16

17

16

17

_Fig.5_

_Fig. 6_